# EUROPÄISCHE PATENTSCHRIFT

(11) **EP 3 771 511 B1**
(45) Veröffentlichungstag und Bekanntmachung des Hinweises auf die Patenterteilung: **26.01.2022**
(21) Anmeldenummer: 19215577.8
(22) Anmeldetag: 12.12.2019
(51) Int. Cl.: B23B 31/00, B28D 1/18, B27C 5/10, B26D 7/26

(54) **HANDFRÄSMASCHINE UND FRÄSWALZE DAFÜR**
HAND MILLING MACHINE AND MILLING DRUM THEREFOR
MACHINE À FRAISER À MAIN ET TAMBOUR DE FRAISAGE CORRESPONDANT

(30) Priorität: 02.08.2019 EP 19189758
(43) Veröffentlichungstag der Anmeldung: 03.02.2021
(73) Patentinhaber: atlas diamant GmbH, 95632 Wunsiedel (DE)
(72) Erfinder: Galeski, Peter, 56457 Westerburg (DE)
(74) Vertreter: Flügel Preissner Schober Seidel

(56) Entgegenhaltungen:
- EP-A1- 1 924 382
- EP-A2- 2 548 697
- CN-A- 102 513 563
- DE-U1-202015 101 167
- FR-A1- 2 913 627
- JP-A- 2010 058 177

## Beschreibung

Die Erfindung betrifft eine Handfräsmaschine zum Bearbeiten einer Oberfläche eines Bodens oder einer Wand, sowie ein Werkzeug, nämlich eine Fräswalze, für eine solche handbetätigte Schneidemaschine. Schneidemaschinen im Sinne dieser Anmeldung umfassen Maschinen zum Fräsen oder Schleifen und sind unter anderem aus EP 2 607 036 B1 sowie aus EP 1 044 774 B1 bekannt. Derartige Maschinen finden beispielsweise beim Entfernen von Kleberresten oder ähnlichen Rückständen von Beton oder Estrich Verwendung.

Handbetätigte Schneidemaschinen offenbaren weiterhin EP 2 548 697 A2 und JP 2010 058 177 A.

Ein Schneidwerkzeug für die Metallbearbeitung, das mit einer Innenkühlung versehen ist, beschreibt CN 102 513 563 A.

Die EP 2 548 697 A2 offenbart eine Handfräsmaschine nach dem Oberbegriff des Anspruchs 1.

Die DE 20 2015 101 167 U1 zeigt in Figur 1 eine Fräswalze umfassend: ein erstes Ende, ein zweites Ende, eine innere Umfangsfläche, eine äußere Umfangsfläche die mit Schneidelementen belegt ist und ein Verbindungselement zum Herstellen einer formschlüssigen Verbindung mit dem Werkzeugträger zumindest in Umfangsrichtung, das als sich in Richtung der Werkzeugachse erstreckende Einbuchtungen ausgebildete Ausnehmungen aufweist, die entlang der Umfangsrichtung an dem ersten Ende angeordnet sind.

Der Erfindung liegt die Aufgabe zugrunde, eine Handfräsmaschine sowie ein Werkzeug für eine solche vorzuschlagen, die eine verbesserte Verbindung und Kraftübertragung zwischen Maschine und Werkzeug ermöglichen.

Die Aufgabe wird durch eine Handfräsmaschine nach Anspruch 1 und ein Werkzeug nach Anspruch 11 gelöst. Vorteilhafte Ausgestaltungen einer solchen handbetätigten Schneidemaschine sind Gegenstand der Ansprüche 2 bis 10. Vorteilhafte Ausgestaltungen des Werkzeugs sind Gegenstand der Ansprüche 12 bis 15.

Die erfindungsgemäße Handfräsmaschine dient zum Bearbeiten einer Oberfläche eines Bodens oder einer Wand und umfasst einen Antrieb, einen Werkzeugträger zum Aufnehmen eines um eine Werkzeugachse rotierbaren Werkzeugs, welcher sich

Werkzeugs, welcher sich entlang der Werkzeugachse erstreckt, ein dem Antrieb zugewandtes erstes Ende, ein dem Antrieb abgewandtes zweites Ende, eine Umfangsfläche und zumindest ein an dem ersten Ende angeordnetes Verbindungselement zur formschlüssigen Aufnahme des Werkzeugs zumindest in Umfangsrichtung aufweist, und auf welchen der Antrieb ein Drehmoment zum Erzeugen einer Rotation des Werkzeugträgers in Umfangsrichtung überträgt, und eine Verspannvorrichtung zum Verspannen des Werkzeugträgers und des Werkzeugs gegen die Schneidemaschine in Richtung der Werkzeugachse.

Erfindungsgemäße Schneidemaschinen umfassen Maschinen zum Fräsen oder Schleifen. Das Werkzeug ist für das jeweilige Verfahren geeignet und kann beispielsweise eine Fräswalze, die insbesondere mit monokristallinem oder polykristallinem Diamant (MKD/PKD) besetzt ist, oder eine Trennscheibe sein.

An dem Werkzeugträger wird das Werkzeug derart befestigt, dass es mittels des Antriebs und des Werkzeugträgers angetrieben werden und rotieren kann. Insbesondere werden der Werkzeugträger und das Werkzeug koaxial angeordnet, wobei vorzugsweise eine innere Umfangsfläche des Werkzeugs an einer äußeren Umfangsfläche des Werkzeugträgers anliegt.

Eine Arbeitsebene erstreckt sich regelmäßig parallel zu der Werkzeugachse und stellt die Ebene dar, entlang der die Maschine beim Arbeitsvorgang bewegt wird. Die Arbeitsebene kann beispielsweise durch die Geometrie des Gehäuses oder der Abdeckung definiert werden. Insbesondere können das Gehäuse oder die Abdeckung Flächen oder Kanten aufweisen, entlang denen die Maschine über die zu bearbeitende Oberfläche bewegt wird.

Das Verbindungselement ermöglicht eine zumindest in Umfangsrichtung formschlüssige Aufnahme des Werkzeugs nahe an dem Antrieb. Die Verspannvorrichtung dient zum Verspannen des Werkzeugträgers und des Werkzeugs gegen die Schneidemaschine, also gegen den Antrieb, in Richtung der Werkzeugachse, also in Axialrichtung des Werkzeugträgers und des Werkzeugs. Durch diese Ausgestaltung ist das Werkzeug in Axialrichtung an der Maschine und an dem Werkzeugträger sicher fixiert. In Umfangsrichtung sind der Werkzeugträger und das Werkzeug formschlüssig verbunden, sodass eine wirksame und verlustarme Drehmomentübertragung von dem Werkzeugträger auf das Werkzeug stattfindet.

Erfindungsgemäß weist das Verbindungselement einen Vorsprung zum Eingreifen in eine Ausnehmung des Werkzeugs auf. Der Vorsprung dient zum Herstellen der formschlüssigen Verbindung zu dem Werkzeug und stellt eine wirksame Übertragung des Drehmoments von dem Werkzeugträger auf das Werkzeug sicher. Aufgrund des Vorsprungs wird außerdem sichergestellt, dass das Werkzeug nicht falsch herum montiert werden kann, sodass Bedienfehler reduziert werden.

In einer besonders bevorzugten Ausgestaltung weist das Verbindungselement eine Vielzahl von Vorsprüngen auf, die entlang der Umfangsrichtung angeordnet sind. Die Vorsprünge können bevorzugt gleiche Abstände zueinander aufweisen beziehungsweise in gleichen Winkeln zueinander angeordnet sein.

Die Verspannvorrichtung weist erfindungsgemäß eine Spannschraube und eine Spannmutter zum Anziehen und Lösen der Spannschraube auf. Die Spannschraube wird vorzugsweise koaxial zu dem Werkzeug und dem Werkzeugträger angezogen. Erfindungsgemäß ist ein Spannteller vorgesehen, welcher eine Durchgangsöffnung für die Spannschraube aufweist. Die Spannschraube wird durch die Durchgangsöffnung des an dem zweiten Ende des Werkzeugträgers und dem Werkzeug angeordneten Spanntellers geführt und mittels der Spannmutter gegen den Spannteller verspannt.

In bevorzugter Ausgestaltung weist die Spannmutter einen vorzugsweise anklappbaren Griff zum Anziehen und Lösen der Spannschraube auf. Mittels des Griffs ist die Spannmutter mit der Spannschraube werkzeuglos von dem Werkzeugträger lösbar. Dies ermöglicht einen schnellen und einfachen Wechsel des Werkzeugs. An der Spannmutter kann vorzugsweise eine Vertiefung vorgesehen sein, die so ausgestaltet ist, dass der anklappbare Griff in dieser versenkt werden kann. So steht der Griff im angeklappten Zustand nicht von der Spannmutter ab, sondern liegt bündig mit der Spannmutter in der Vertiefung.

Vorzugsweise weist der Werkzeugträger an seiner Umfangsfläche wenigstens einen ersten Abschnitt, wenigstens einen zweiten Abschnitt, der einen kleineren Außendurchmesser als der erste Abschnitt aufweist, und einen sich vorzugsweise in Umfangsrichtung erstreckenden Absatz auf, der den ersten Abschnitt von dem zweiten Abschnitt trennt. Beispielsweise kann in einem Ausführungsbeispiel der Werkzeugträger einen ersten Abschnitt an dem ersten Ende, einen ersten Abschnitt an dem zweiten Ende und dazwischen einen zweiten Abschnitt aufweisen. Demzufolge ist der Außendurchmesser des Werkzeugträgers an dem ersten Ende und dem zweiten Ende größer als dazwischen. Der erste Abschnitt oder, sofern mehrere erste Abschnitte vorhanden sind, die ersten Abschnitte dienen zum Führen des Werkzeugs in Umfangsrichtung.

Gemäß einer besonders bevorzugten Ausgestaltung weist der erste Abschnitt an seinem Außenumfang wenigstens eine ebene Fläche auf. Die ebene Fläche erstreckt sich vorzugsweise quer zu der Umfangsrichtung und parallel zu der Axialrichtung. Besonders bevorzugt sind mehrere ebene Flächen entlang dem Umfang des Werkzeugträgers verteilt. Die ebene Fläche kann beispielweise durch Materialabtrag, insbesondere durch Fräsen, hergestellt sein.

Die handbetätigte Schneidemaschine weist erfindungsgemäß ein Gehäuse für den Werkzeugträger und das Werkzeug auf, das eine dem zweiten Ende zugewandte lösbare Abdeckung zum Wechsel des Werkzeugs aufweist. Das Gehäuse kann insbesondere an einem Maschinenkörper vorgesehen sein. Das Gehäuse dient unter anderem der Arbeitssicherheit, um ein Greifen in das rotierende Werkzeug zu vermeiden. Es ist zu mindestens einer Seite hin offen, um einen Kontakt des darin befindlichen Werkzeugs zu der zu bearbeitenden Oberfläche herstellen zu können. Die lösbare Abdeckung des Gehäuses ist an dem zweiten Ende des Werkzeugträgers angeordnet, um einen einfachen Zugang zu dem Werkzeug und dem Werkzeugträger zu erleichtern und einen schnellen Werkzeugwechsel zu ermöglichen.

Das Gehäuse kann vorzugsweise wenigstens eine Führung zum Anbringen der Abdeckung an dem Gehäuse aufweisen. Die Führung kann zum Beispiel zwei an gegenüberliegenden Seiten des Gehäuses angeordnete Führungsschienen umfassen, entlang denen die Abdeckung eingeschoben werden kann, bis sie vollständig an dem Gehäuse anliegt und eine von der Abdeckung verdeckte Gehäuseöffnung vollständig verschließt. Hierfür können an der Abdeckung vorzugsweise Zapfen, Vorsprünge oder Flanken vorgesehen sein, die so gestaltet sind, dass sie in die Führungsschienen eingreifen können. Die Führung ist vorzugsweise so ausgebildet, dass die Abdeckung nur in einer Richtung eingeschoben werden kann. Vorzugsweise ist die Abdeckung rechtwinklig oder nahezu rechtwinklig zu der Arbeitsebene einschiebbar, besonders bevorzugt wird die Abdeckung in einem rechten Winkel zu der Arbeitsebene hin eingeschoben und in einem rechten Winkel von der Arbeitsebene weg entfernt.

In bevorzugter Ausgestaltung kann eine an dem Gehäuse angeordnete Verriegelung zum Halten der Abdeckung an dem Gehäuse vorhanden sein. Vorzugsweise ist die Verriegelung drehbar gelagert, sodass sie von einer Stellung, in der sie Abdeckung an dem Gehäuse hält, durch Drehen in eine Stellung bewegt werden kann, in der sie die Abdeckung freigibt, sodass die Abdeckung von dem Gehäuse entfernt werden kann. Vorzugsweise ist die Verriegelung händisch bewegbar, also insbesondere drehbar, sodass die Abdeckung ohne zusätzliches Werkzeug von dem Gehäuse gelöst werden kann, was den Wechsel des Werkzeugs zusätzlich erleichtert.

Vorzugsweise umfasst die handbetätigte Schneidemaschine eine Absaugöffnung zum Absaugen von Abtrag und zum Befestigen eines Absaugschlauchs. Die Absaugöffnung kann an dem Gehäuse angebracht sein, indem in die Gehäusewand die Absaugöffnung für den Absaugschlauch, der mit einem geeigneten Staubsauger verbunden wird, umfasst. Der Absaugschlauch wird an der Absaugöffnung befestigt, sodass Abtrag und Staub während der Bearbeitung unmittelbar abgesaugt werden können. Dadurch wird für den Bediener sichergestellt, dass dieser während der Bearbeitung nicht durch Abtrag und Staub belästigt wird. Vorzugsweise ist die Absaugöffnung so angeordnet, dass der Abtrag durch das Werkzeug während der Bearbeitung unmittelbar zu der Absaugöffnung befördert oder geschleudert wird.

Die handbetätigte Schneidemaschine kann eine Einstellschraube zum Einstellen einer Frästiefe aufweisen. Das Einstellen kann insbesondere stufenlos erfolgen. Vorzugsweise weist der Maschinenkörper Markierungen zum Ablesen der eingestellten Frästiefe auf. Dadurch lässt sich jederzeit die Frästiefe der Maschine ablesen und einstellen.

Das erfindungsgemäße Werkzeug ist eine Fräswalze und dazu bestimmt, für die erfindungsgemäße Handfräsmaschine verwendet zu werden. Es umfasst ein erstes Ende, ein zweites Ende, eine innere Umfangsfläche, eine äußere Umfangsfläche und ein an dem ersten Ende angeordnetes Verbindungselement zum Herstellen einer formschlüssigen Verbindung mit dem Werkzeugträger zumindest in Umfangsrichtung. Vorzugsweise wird das Werkzeug aus einem Rohr herstellt. Das Verbindungselement kann an dem Werkzeug befestigt, beispielsweise angeschweißt, sein, oder es kann in das Werkzeug eingebracht sein, insbesondere durch spanende Verfahren. Beispielsweise kann das Verbindungselement in das Werkzeug eingefräst sein. Erfindungsgemäß ist das Verbindungselement des Werkzeugs so ausgebildet, dass es mit dem Verbindungselement des Werkzeugträgers korrespondiert, um die formschlüssige Verbindung herzustellen.

Erfindungsgemäß umfasst das Werkzeug einen Spannteller, der in vorteilhafter Ausgestaltung in das Werkzeug eingepresst ist. Der Spannteller bildet eine Verspannfläche für die Verspannvorrichtung, insbesondere für die Spannmutter, aus. Dadurch ist eine sichere Befestigung gewährleistet.

Das Werkzeug weist erfindungsgemäß an dem Verbindungselement als Einbuchtungen ausgebildete Ausnehmungen auf, die entlang der Umfangsrichtung angeordnet sind. Die Einbuchtungen oder Ausnehmungen erstrecken sich in Axialrichtung des Werkzeugs bis zum ersten Ende. Es bietet sich an, die Ausnehmungen so anzuordnen und auszubilden, dass diese exakt mit den Vorsprüngen des Verbindungselements des Werkzeugträgers übereinstimmen.

Erfindungsgemäß ist die äußere Umfangsfläche mit Schneidelementen belegt. Die Schneidelemente können insbesondere aus monokristallinem oder polykristallinem Diamant bestehen.

Im Folgenden wird die Erfindung anhand von Ausführungsbeispielen beschrieben. In den Zeichnungen zeigt:
- Fig. 1: eine perspektivische Ansicht einer erfindungsgemäßen, als Handfräsmaschine ausgebildeten Schneidemaschine;
- Fig. 2: eine perspektivische Ansicht der Schneidemaschine aus Fig. 1 in Explosionsansicht;
- Fig. 3: eine perspektivische Ansicht der Schneidemaschine aus Fig. 1 in Explosionsansicht;
- Fig. 4: eine perspektivische Ansicht des Maschinenkörpers und der Arretierung von der Schneidemaschine aus Fig. 1 in Explosionsansicht;
- Fig. 5: eine perspektivische Ansicht der Arretierung von der Schneidemaschine aus Fig. 1 in Explosionsansicht;
- Fig. 6: eine Explosionsansicht eines Werkzeugträgers, einer Fräswalze und einer Spannmutter;
- Fig. 7: eine perspektivische Ansicht eines Werkzeugträgers, einer Fräswalze und einer Spannmutter in teilmontiertem und in montiertem Zustand;
- Fig. 8: eine perspektivische Ansicht eines Werkzeugträgers und einer Fräswalze;
- Fig. 9: eine perspektivische Ansicht einer nicht-erfindungsgemäßen als Handkreissäge ausgebildeten Schneidemaschine;
- Fig. 10: eine weitere perspektivische Ansicht der Schneidemaschine aus Fig. 9; und
- Fig. 11: eine perspektivische Ansicht einer weiteren Ausgestaltung der erfindungsgemäßen, als Handfräsmaschine ausgebildeten Schneidemaschine.

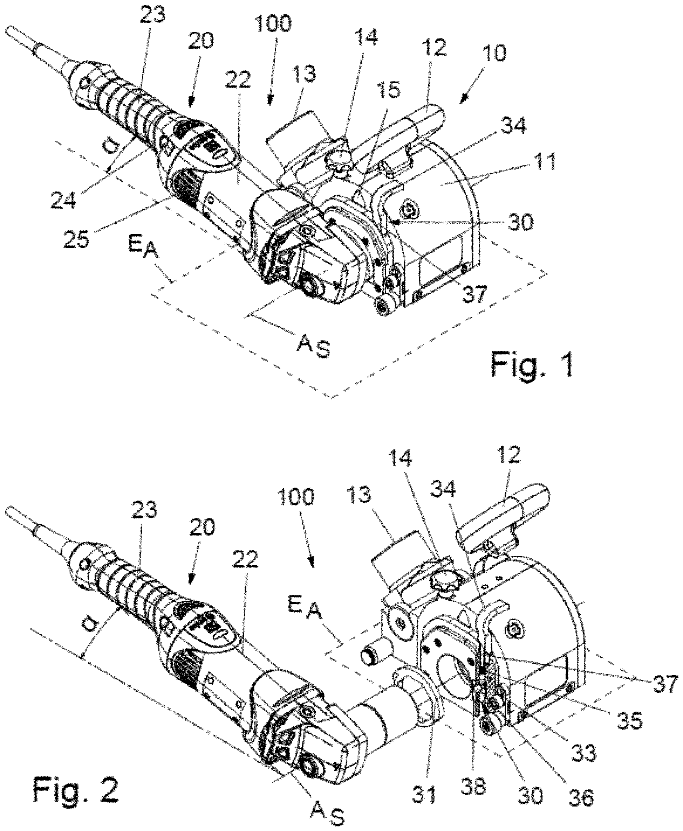

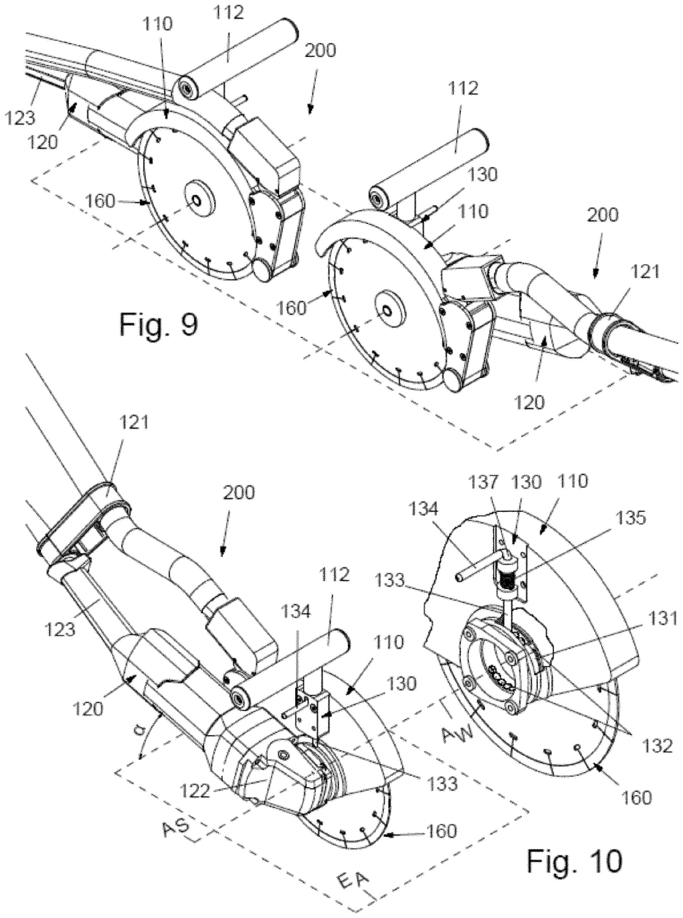

Fig. 1 bis 3 und Fig. 11 zeigen perspektivische Ansichten einer Schneidemaschine, die als Handfräsmaschine 100 zum Bearbeiten einer Oberfläche eines Bodens oder einer Wand ausgebildet ist, und Fig. 9 und 10 zeigen perspektivische Ansichten einer nicht-erfindungsgemäßen Schneidemaschine, die als Handkreissäge 200 ausgebildet ist. Die Maschinen 100, 200 weisen jeweils einen Maschinenkörper 10, 110 auf.

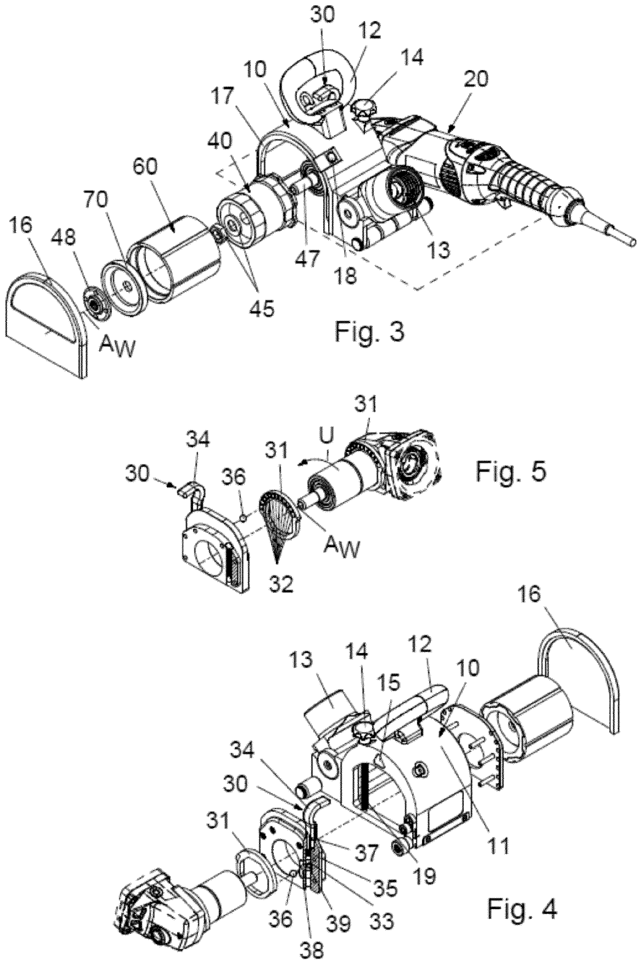

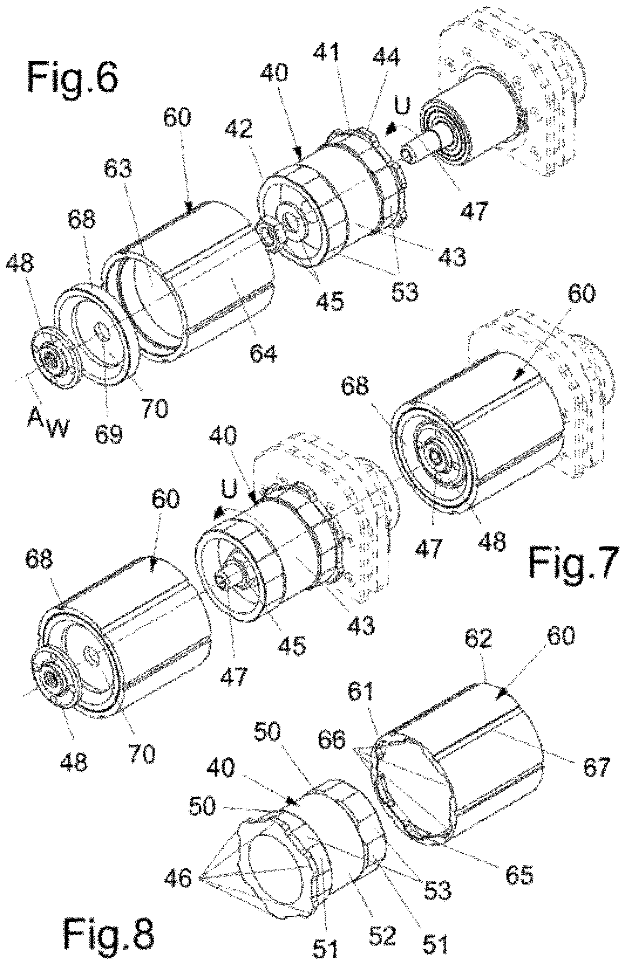

Die Handfräsmaschine 100 gemäß Fig. 1 bis 3 und Fig. 11 umfasst ein Gehäuse 11, in dem als Werkzeug 60 eine insbesondere in Fig. 3 und 6 bis 8 anschaulich gezeigte und um eine Werkzeugachse Aw rotierbare Fräswalze aufgenommen ist. An dem Gehäuse 11 ist ein Haltegriff 12 zum Halten des Maschinenkörpers 10 befestigt. Das Gehäuse 11 definiert eine Arbeitsebene E_{A}, zu welcher sich die Werkzeugachse Aw parallel erstreckt. Die Handfräsmaschine 100 weist ferner einen Führungsgriff 20 auf, mit dem die Handfräsmaschine 100 geführt wird, der sich um einen veränderlichen Winkel α geneigt zu der Arbeitsebene E_{A} erstreckt und um eine Schwenkachse As schwenkbar an dem Gehäuse 11 gelagert ist. Mittels der schwenkbaren Lagerung kann der Führungsgriff 20 relativ zu dem Gehäuse, und damit zu der Arbeitsebene E_{A} geschwenkt werden, um den Winkel α einzustellen. Ferner umfasst die Handfräsmaschine 100 eine Arretierung 30 zum Feststellen des Führungsgriffs 20 relativ zu der Arbeitsebene E_{A}.

Die Handfräsmaschine 100 umfasst außerdem einen insbesondere in Fig. 3 und 6 bis 8 gezeigten Werkzeugträger 40, auf dem das als Fräswalze ausgebildete Werkzeug 60 aufgenommen wird. Der Werkzeugträger 40 erstreckt sich entlang der Werkzeugachse Aw.

Auch an dem Maschinenkörper 110 der Handkreissäge 200 gemäß Fig. 9 und 10 ist ein um eine Werkzeugachse Aw rotierbares Werkzeug 160, eine Trennscheibe, aufgenommen. An dem Maschinenkörper 110 ist ein Haltegriff 112 zum Halten des Maschinenkörpers 110 befestigt. Die Werkzeugachse Aw erstreckt sich parallel zu einer Arbeitsebene E_{A}. Die Handkreissäge 200 weist ebenfalls einen Führungsgriff 120 zum Führen der Handkreissäge 200 auf. Der Führungsgriff 120 erstreckt sich um einen Winkel α geneigt zu der Arbeitsebene E_{A} und ist um eine Schwenkachse A_{S} schwenkbar an dem Maschinenkörper 110 gelagert, um den Winkel α einzustellen. Ferner umfasst die Handkreissäge 200 eine Arretierung 130 zum Feststellen des Führungsgriffs 120 relativ zu der Arbeitsebene E_{A}.

Die Werkzeuge 60, 160 sind jeweils so an den Maschinenkörpern 10, 110 angebracht, dass ein Antrieb sie antreiben kann und sie um die Werkzeugachse Aw rotieren können. Die Handfräsmaschine 100 gemäß Fig. 1 weist außerdem eine Einstellschraube 14 auf, um eine Frästiefe stufenlos einzustellen. Zu diesem Zweck ist die Einstellschraube 14 mit einem Gewindestab 19 verbunden, der entlang einem am Gehäuse 11 vorgesehenen Innengewinde senkrecht zu der Werkzeugachse Aw verfahren werden kann, um die Frästiefe einzustellen. An dem Gehäuse 11 sind Markierungen 15 angebracht, die zum Ablesen der eingestellten Frästiefe dienen. Um den Antrieb unterzubringen, weisen die Führungsgriffe 20, 120 jeweils einen Antriebsbereich 22, 122 auf. Darüber hinaus haben die Führungsgriffe 20, 120 jeweils einen von dem Antriebsbereich 22, 122 abgetrennten Greifbereich 23, 123. Der Antrieb ist in dem Antriebsbereich 22, 122 angeordnet. An dem Greifbereich 23, 123 ist ein Schaltknopf 24 angeordnet, mittels dem der Antrieb betätigt werden kann. Der Antriebsbereich 22, 122 ist näher zu der Schwenkachse As hin angeordnet, als der Greifbereich 23, 123, sodass die Masse des Führungsgriffs 20, 120 und des Antriebs so verteilt ist, dass die eine einfache Bedienbarkeit und Schwenkbarkeit des Führungsgriffs 20, 120 ermöglicht. Außerdem bewirkt dies eine Anordnung des Antriebs nahe an der Schwenkachse As, woraus ein geringer Abstand des Antriebs zu dem Werkzeug 60, 160 resultiert. Der Führungsgriff 20, 120 weist ferner Lüftungsöffnungen 25 für den Antrieb auf, die als Lüftungsschlitze ausgebildet sind. Diese sind in dem Antriebsbereich 22, 122 angeordnet, um zu vermeiden, dass Bediener die Lüftungsöffnungen 25 im Betrieb ungewollt verdecken.

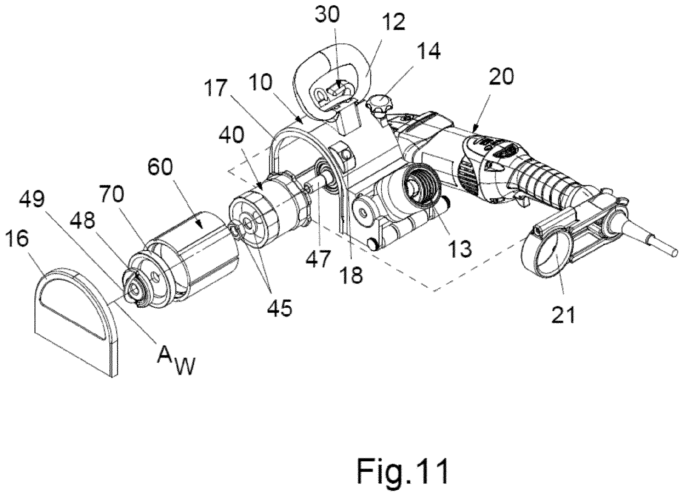

Das Gehäuse 11 umfasst eine Absaugöffnung 13, an der ein Absaugschlauch befestigt werden kann, um Abtrag und Staub, die im Betrieb entstehen, abzusaugen. Der Führungsgriff 20 weist in der Ausgestaltung gemäß Fig. 11 eine Lagerung 21 auf, an der der Absaugschlauch gelenkig gelagert werden kann. Die Lagerung 21 ist eine optionale Ausgestaltung, die in Abhängigkeit von der Führung des Schlauchs vorgesehen werden kann. Die Absaugöffnung 13 ist an einer Stelle des Gehäuses 11 angeordnet, zu der jeglicher Abtrag durch das Werkzeug 60 während der Bearbeitung befördert oder geschleudert wird. Dies ermöglicht ein zügiges Absaugen, bei dem keine große Belastung durch Abtrag oder Staub entsteht.

Der Haltegriff 12, 112 dient zum Halten des Maschinenkörpers 10, 110 mit einer Hand, insbesondere der linken Hand. Der Führungsgriff 20, 120 dient zum Führen der Maschine 100, 200 entlang oder parallel zu der Arbeitsebene E_{A} und kann mit der anderen Hand, insbesondere der rechten Hand, bedient werden. Sowohl der Haltegriff 12 als auch der Führungsgriff 20 der Handfräsmaschine 100 gemäß Fig. 1 bis 3 sind ergonomisch geformt, sodass sie der Form einer Hand angepasst sind.

Wie oben beschrieben, sind die Führungsgriffe 20, 120 jeweils um die Schwenkachse A_{S} relativ zu der Arbeitsebene E_{A} schwenkbar. Dadurch ist es möglich, den Winkel α der Führungsgriffe 20, 120 relativ zu der Arbeitsebene E_{A} zu verändern. Die Führungsgriffe 20, 120 sind um 360° schwenkbar, das heißt der Winkel α kann um 360° verändert werden. Durch die Schwenkbarkeit wird ermöglicht, dass in Eckbereichen, wenn sich die Maschine 100, 200 bei der Bearbeitung einer Wandfläche dem Boden nähert, oder wenn sich die Maschine 100, 200 beim Bearbeiten einer Bodenfläche einer Wand nähert, nahezu der gesamte Eckbereich mit der Maschine 100, 200 bearbeitet werden kann. Bei der Ausgestaltung als Handkreissäge 200 schwenkt ein an dem Führungsgriff 120 befestigter Absaugschlauch (nicht in Fig. 1 bis 3 dargestellt) mit dem Führungsgriff 120 um die Arbeitsebene E_{A}, sodass der Absaugschlauch sowohl bei einem ziehenden als auch bei einem drückenden Betrieb den jeweiligen Abtrag zuverlässig absaugen kann.

Die Arretierungen 30, 130 der Maschinen 100, 200 weisen jeweils einen Arretierkörper 31, 131, in den jeweils mehrere Ausnehmungen 32, 132 eingebracht sind, auf, wie insbesondere Fig. 4, 5 und 10 anschaulich zeigen. Außerdem umfassen die Arretierungen 30, 130 jeweils ein Verriegelungselement 33, 133, welches in die Ausnehmungen 32, 132 eingreifen kann. Jede Ausnehmung 32, 132 stellt eine Position dar, in der die Arretierung 30, 130 den Führungsgriff 20, 120 relativ zu der Arbeitsebene E_{A} feststellen kann.

Bei der Handfräsmaschine 100 gemäß Fig. 1 bis 5 sind die Ausnehmungen 32 kugelsegmentförmig ausgebildet. Dementsprechend ist eine Kugel 36 für die Ausnehmungen 32 als Verriegelungselement 33 vorgesehen. Die Handkreissäge 200 weist Ausnehmungen 132 auf, welche als Sacklöcher ausgebildet sind, in die ein als Zugstab 137 ausgebildetes Verriegelungselement 133 eingreifen kann. Die Ausnehmungen 32, 132 sind jeweils entlang einer Kreisbahn mit gleichen Abständen zueinander angeordnet, sodass die Schwenkbewegung des jeweiligen Führungsgriffs 20, 120 abgebildet wird. Die Ausnehmungen 32, 132 ermöglichen mehrere Möglichkeiten der Arretierung entlang dieser Kreisbahn.

Mittels eines Handgriffs 34, 134 können die jeweiligen Verriegelungselemente 33, 133 aus den Ausnehmung 32, 132 gelöst werden, sodass die Arretierung 30, 130 entriegelt wird. Der Handgriff 34, 134 ist jeweils im Bereich des Haltegriffs 12, 112 angeordnet, sodass die Arretierung 30, 130 auch im laufenden Betrieb der Maschinen 100, 200 mittels der am Haltegriff 12, 112 befindlichen Hand gelöst werden kann. Bei der Handkreissäge 200 geschieht dies, indem der Zugstab 137 direkt mit dem Handgriff 134 verbunden ist und bei einem Betätigen des Handgriffs 134 aus den Ausnehmungen 132 gelöst wird.

Bei der Handfräsmaschine 100 geschieht dies mittels eines Mechanismus, welcher besonders anschaulich aus Fig. 2, 4 und 5 hervorgeht: Der Zugstab 37 umfasst ein koaxial zu dem Zugstab 37 angeordnetes Halteelement 38, welches die Kugel 36 in einer der Ausnehmungen 32 halten kann. Das Halteelement 38 weist einen größeren Durchmesser als der Zugstab 37 und eine Einschnürung 39 auf. Das Halteelement 38 ist so angeordnet, dass die Kugel 36 aufgrund des Durchmessers des Halteelements 38 in der Ausnehmung 32 gehalten wird. Wenn der Zugstab 37 mittels des Handgriffs 34 betätigt wird, wird das Halteelement 38 so bewegt, dass die Kugel 36 aus der Ausnehmung 32 in die Einschnürung 39 des Halteelements 38 entweichen kann. Die Arretierung 30 wird dann freigegeben, und der Führungsgriff 20, 120 ist um die Schwenkachse As schwenkbar. Wird der Zugstab 37 wieder zurückgeführt, wird die Kugel 36 aufgrund der Geometrie der Einschnürung 39 in eine Ausnehmung 32 befördert, sodass die Arretierung 30 verriegelt wird. Aufgrund der Ausgestaltung als Kugel 36 ist zudem gewährleistet, dass beim Ver- oder Entriegeln kein Verkanten auftreten kann.

Um die Arretierung 30, 130 beim Lösen des Handgriffs 34, 134 in den verriegelten Zustand zurückzuführen und zuverlässig in diesem zu halten, weisen die Arretierungen 30, 130 jeweils eine Feder 35, 135 auf. Die Federn 35, 135 wirken jeweils einer Betätigung des Handgriffs 34, 134 entgegen.

Der in Fig. 3 und 6 bis 8 gezeigte Werkzeugträger 40 weist ein dem Antrieb, also dem Führungsgriff 20, zugewandtes erstes Ende 41, ein dem Antrieb abgewandtes zweites Ende 42, eine Umfangsfläche 43 und mehrere an dem ersten Ende 41 angeordnete Verbindungselemente 44 auf, mittels denen ein Werkzeug 60 in Umfangsrichtung U formschlüssig aufgenommen werden kann. Die Verbindungselemente 44 sind als entlang der Umfangsrichtung U angeordnete Vorsprünge 46 ausgebildet, welche gleiche Abstände zueinander aufweisen beziehungsweise in gleichen Winkeln zueinander angeordnet sind. Der Antrieb überträgt beim Betrieb der Handfräsmaschine 100 auf den Werkzeugträger 40 ein Drehmoment zum Erzeugen einer Rotation des Werkzeugträgers 40 in Umfangsrichtung U.

An dem Werkzeugträger 40 wird das Werkzeug 60, eine Fräswalze, derart befestigt, dass es mittels des Antriebs und des Werkzeugträgers 40 in Umfangsrichtung U angetrieben werden und rotieren kann. Der Werkzeugträger 40 und das Werkzeug 60 werden koaxial angeordnet. Dabei liegt eine innere Umfangsfläche 63 des Werkzeugs 60 an der äußeren Umfangsfläche 43 des Werkzeugträgers 40 an. Die äußere Umfangsfläche 43 weist zu diesem Zweck und zum Führen des Werkzeugs 60 wenigstens einen ersten Abschnitt 51, bevorzugt zwei oder mehr erste Abschnitte 51, einen zweiten Abschnitt 52, der einen kleineren Außendurchmesser als die ersten Abschnitte 51 aufweist, und sich in Umfangsrichtung U erstreckende Absätze 50 auf, die die ersten Abschnitte 51 von dem zweiten Abschnitt 52 trennen. Die ersten Abschnitte 51 sind mit ebenen Flächen 53 versehen, die sich quer zu der Umfangsrichtung U erstrecken. Die ebenen Flächen 53 sind entlang dem Umfang des Werkzeugträgers 40 verteilt und werden beispielweise durch Materialabtrag, insbesondere durch Fräsen, angebracht. Das Werkzeug 60 ist aus einem Rohr hergestellt und weist ein erstes Ende 61, ein zweites Ende 62, eine mit Schneidelementen 67 belegte äußere Umfangsfläche 64 und mehrere an dem ersten Ende 61 angeordnete Verbindungselemente 65 auf, die zum Herstellen einer formschlüssigen Verbindung mit dem Werkzeugträger 40 in Umfangsrichtung U dienen. Die Verbindungselemente 65 sind als entlang der Umfangsrichtung U angeordnete Einbuchtungen 66 ausgebildet, die sich in Axialrichtung des Werkzeugs 60 bis zum ersten Ende 61 erstrecken. Die Einbuchtungen 66 und die Vorsprünge 46 korrespondieren zueinander, sodass im montierten Zustand die Vorsprünge 46 in die Einbuchtungen 66 eingreifen und so eine formschlüssige Verbindung zwischen dem Werkzeugträger 40 und dem Werkzeug 60 in Umfangsrichtung U bilden. Ferner wird dadurch sichergestellt, dass das Werkzeug 60 nicht falsch herum eingebaut werden kann. Die Schneidelemente 67 sind üblicherweise aus monokristallinem oder polykristallinem Diamant hergestellt.

Um das Werkzeug 60 in Axialrichtung festzulegen, ist eine Verspannvorrichtung 45 vorgesehen, mit der der Werkzeugträger 40 und das Werkzeug 60 gegen die Handfräsmaschine 100 in Richtung der Werkzeugachse Aw, also in Axialrichtung des Werkzeugträgers 40 und des Werkzeugs 60 verspannt werden können. Die Verspannvorrichtung 45 weist eine Spannschraube 47 und eine Spannmutter 48 zum Anziehen und Lösen der Spannschraube 47 auf. Die Spannschraube 47 wird koaxial zu dem Werkzeug 60 und dem Werkzeugträger 40 angezogen. Dazu dient ein Spannteller 68, welcher nicht lösbar mit dem Werkzeug 60 verbunden, vorzugsweise eingepresst ist. In anderen Ausgestaltungen kann der Spannteller 68 mittels eines am Spannteller 68 angebrachten Gewindes, einer Passung oder mittels Madenschrauben mit dem Werkzeug 60 verbunden sein. Der Spannteller 68 dient als Plattform für die Spannmutter 48, indem er eine Verspannfläche 70 für die Spannmutter 48 ausbildet, und weist eine Durchgangsöffnung 69 für die Spannschraube 47 auf. Die Spannschraube 47 wird durch die Durchgangsöffnung 69 des an dem zweiten Ende 42 des Werkzeugträgers 40 und dem Werkzeug 60 angeordneten Spanntellers 68 geführt und mittels der Spannmutter 48 gegen den Spannteller 68 verspannt. Durch diese Ausgestaltung ist das Werkzeug 60 in Axialrichtung an der Maschine 100 und an dem Werkzeugträger 40 sicher fixiert. Der eingepresste Spannteller 68 liegt an dem Innenumfang des Werkzeugs 60 an und dichtet nach außen, insbesondere gegen Staub, ab. Der Spannteller 68 kann zudem farblich gestaltet oder beschriftet werden, beispielsweise kann er durch den Herstellernamen gekennzeichnet werden.

Die Spannmutter 48 weist in der Ausgestaltung gemäß Fig. 11 einen anklappbaren Griff 49 zum Anziehen und Lösen der Spannschraube 47 ohne ein zusätzliches Hilfsmittel, wie etwa einen Schraubenschlüssel, auf. Mittels des Griffs 49 ist die Spannmutter 48 mit der Spannschraube 47 werkzeuglos von dem Werkzeugträger 40 lösbar. Die Spannmutter 48 weist eine Vertiefung auf, um den anklappbaren Griff 49 in dieser zu versenken.

Der Werkzeugträger 40 und das Werkzeug 60 sind in dem Gehäuse 11 aufgenommen, wie insbesondere Fig. 3 anschaulich zeigt. Das Gehäuse 11 weist eine dem zweiten Ende 42 des Werkzeugträgers 40 zugewandte lösbare Abdeckung 16 auf, welche den Wechsel des Werkzeugs 60 erleichtert. Die lösbare Abdeckung 16 des Gehäuses 11 ist an dem zweiten Ende 42 des Werkzeugträgers 40 angeordnet, um einen einfachen Zugang zu dem Werkzeug 60 und dem Werkzeugträger 40 zu erleichtern und einen schnellen Werkzeugwechsel zu ermöglichen.

Zum schnellen und einfachen Entfernen der Abdeckung 16 weist das Gehäuse 11 eine Führung 17 auf, entlang der die Abdeckung 16 an dem Gehäuse 11 eingeschoben werden kann, um die Abdeckung 16 an dem Gehäuse 11 anzubringen. Die Führung 17 ist durch zwei an gegenüberliegenden Seiten des Gehäuses 11 angeordnete Führungsschienen ausgebildet, entlang denen die Abdeckung 16 eingeschoben werden kann. Die Führung 17 erstreckt sich dabei rechtwinklig zu der Arbeitsebene E_{A}, sodass die Abdeckung 16 in einem rechten Winkel zu der Arbeitsebene E_{A} hin eingeschoben und in einem rechten Winkel von der Arbeitsebene E_{A} weg entfernt werden kann.

Ferner ist an dem Gehäuse 11 eine Verriegelung 18 angebracht, die dazu dient, die Abdeckung 16 an dem Gehäuse 11 und in der Führung 17 zu halten. Die Verriegelung 18 ist drehbar gelagert und kann händisch ohne Werkzeug von einer Stellung, in der sie Abdeckung 16 an dem Gehäuse 11 hält, in eine Stellung bewegt werden, in der sie die Abdeckung 16 freigibt, sodass die Abdeckung 16 von dem Gehäuse 11 und aus der Führung 17 entfernt werden kann.

**Bezugszeichenliste**

| | | | |
|---|---|---|---|
| 10 | Maschinenkörper | 40 | Werkzeugträger |
| 11 | Gehäuse | 41 | erstes Ende |
| 12 | Haltegriff | 42 | zweites Ende |
| 13 | Absaugöffnung | 43 | Umfangsfläche |
| 14 | Einstellschraube | 44 | Verbindungselement |
| 15 | Markierung | 45 | Verspannvorrichtung |
| 16 | Abdeckung | 46 | Vorsprung |
| 17 | Führung | 47 | Spannschraube |
| 18 | Verriegelung | 48 | Spannmutter |
| 19 | Gewindestab | 49 | Griff |
| | | 50 | Absatz |
| 20 | Führungsgriff | 51 | erster Abschnitt |
| 21 | Lagerung | 52 | zweiter Abschnitt |
| 22 | Antriebsbereich | 53 | ebene Fläche |
| 23 | Greifbereich | | |
| 24 | Schaltknopf | 60 | Werkzeug |
| 25 | Lüftungsöffnung | 61 | erstes Ende |
| | | 62 | zweites Ende |
| 30 | Arretierung | 63 | innere Umfangsfläche |
| 31 | Arretierkörper | 64 | äußere Umfangsfläche |
| 32 | Ausnehmung | 65 | Verbindungselement |
| 33 | Verriegelungselement | 66 | Einbuchtung |
| 34 | Handgriff | 67 | Schneidelement |
| 35 | Feder | 68 | Spannteller |
| 36 | Kugel | 69 | Durchgangsöffnung |
| 37 | Zugstab | 70 | Verspannfläche |
| 38 | Halteelement | | |
| 39 | Einschnürung | 100 | Handfräsmaschine |
| 110 | Maschinenkörper | | |
| 112 | Haltegriff | | |
| 120 | Führungsgriff | | |
| 122 | Antriebsbereich | | |
| 123 | Greifbereich | | |
| 130 | Arretierung | | |
| 131 | Arretierkörper | | |
| 132 | Ausnehmung | | |
| 133 | Verriegelungselement | | |
| 134 | Handgriff | | |
| 135 | Feder | | |
| 137 | Zugstab | | |
| 160 | Werkzeug | | |
| 200 | Handkreissäge | | |
| As | Schwenkachse | | |
| Aw | Werkzeugachse | | |
| E_{A} | Arbeitsebene | | |
| U | Umfangsrichtung | | |
| α | Winkel | | |

## Patentansprüche

1. Handfräsmaschine (100) zum Bearbeiten der Oberfläche eines Bodens oder einer Wand, umfassend:
einen Antrieb; und
einen Werkzeugträger (40) zum Aufnehmen eines um eine Werkzeugachse (Aw) rotierbaren Werkzeugs (60), der sich entlang der Werkzeugachse (Aw) erstreckt, ein dem Antrieb zugewandtes erstes Ende (41), ein dem Antrieb abgewandtes zweites Ende (42), eine Umfangsfläche (43) und zumindest ein Verbindungselement (44) zur formschlüssigen Aufnahme des Werkzeugs (60) zumindest in Umfangsrichtung (U) aufweist, und auf den der Antrieb ein Drehmoment zum Erzeugen einer Rotation des Werkzeugträgers (40) in Umfangsrichtung (U) überträgt;
**gekennzeichnet durch** eine Verspannvorrichtung (45) zum Verspannen des Werkzeugträgers (40) und des Werkzeugs (60) gegen die Handfräsmaschine in Richtung der Werkzeugachse (Aw), die eine Spannschraube (47) und eine Spannmutter (48) zum Anziehen und Lösen der Spannschraube (47) aufweist; und
durch ein Gehäuse (11) für den Werkzeugträger (40) und das Werkzeug (60), das eine dem zweiten Ende (42) zugewandte lösbare Abdeckung (16) zum Wechseln des Werkzeugs (60) aufweist;
wobei das Verbindungselement (44) an dem ersten Ende (41) angeordnet ist und wenigstens einen Vorsprung (46) zum Eingreifen in wenigstens eine Ausnehmung (66) des Werkzeugs (60) aufweist.

2. Handfräsmaschine nach Anspruch 1, **dadurch gekennzeichnet, dass** die Spannmutter (48) einen anklappbaren Griff (49) zum Anziehen und Lösen der Spannschraube (47) aufweist.

3. Handfräsmaschine nach Anspruch 1 oder 2, **dadurch gekennzeichnet, dass** das Gehäuse (11) wenigstens eine Führung (17) zum Anbringen der Abdeckung (16) an dem Gehäuse (11) aufweist.

4. Handfräsmaschine nach einem der Ansprüche 1 bis 3, **gekennzeichnet durch** eine an dem Gehäuse (11) angeordnete Verriegelung (18) zum Halten der Abdeckung (16) an dem Gehäuse (11).

5. Handfräsmaschine nach einem der Ansprüche 1 bis 4, **gekennzeichnet durch** eine Absaugöffnung (13) zum Absaugen von Abtrag und zum Befestigen eines Absaugschlauchs.

6. Handfräsmaschine nach einem der Ansprüche 1 bis 5, **gekennzeichnet durch** eine Einstellschraube (14) zum insbesondere stufenlosen Einstellen einer Frästiefe.

7. Handfräsmaschine nach einem der Ansprüche 1 bis 6, **dadurch gekennzeichnet, dass** der Werkzeugträger (40) eine Umfangsfläche (43) hat, die umfasst:
wenigstens einen ersten Abschnitt (51), der ausgestaltet ist, das Werkzeug (60) zu führen;
wenigstens einen zweiten Abschnitt (52), der einen kleineren Außendurchmesser als der erste Abschnitt (51) aufweist, und
einen sich in Umfangsrichtung (U) erstreckenden Absatz (50), der den ersten Abschnitt (51) von dem zweiten Abschnitt (52) trennt.

8. Handfräsmaschine nach einem der Ansprüche 1 bis 7, **dadurch gekennzeichnet, dass** das Verbindungselement (44) eine Vielzahl von in radialer Richtung des Werkzeugträgers (40) von der Umfangsfläche (43) abstehende Vorsprünge (46) aufweist, die entlang der Umfangsrichtung (U) angeordnet sind.

9. Handfräsmaschine nach Anspruch 8, **dadurch gekennzeichnet, dass** die Vorsprünge (46) gleiche Abstände zueinander aufweisen.

10. Handfräsmaschine nach Anspruch 7, **dadurch gekennzeichnet, dass** der erste Abschnitt (51) an seinem Außenumfang wenigstens eine ebene Fläche aufweist.

11. Werkzeug (60) für eine Handfräsmaschine nach Anspruch 7 und 8 oder nach Anspruch 9 und 10, das als Fräswalze ausgestaltet ist, umfassend:
ein erstes Ende (61);
ein zweites Ende (62);
eine innere Umfangsfläche (63), die ausgestaltet ist, an dem ersten Abschnitt (51) der Umfangsfläche (43) des Werkzeugträgers (40) anzuliegen;
eine äußere Umfangsfläche (64), die mit Schneidelementen (67) belegt ist;
ein Verbindungselement (65) zum Herstellen einer formschlüssigen Verbindung mit dem Werkzeugträger (40) zumindest in Umfangsrichtung (U), das als sich in Richtung der Werkzeugachse (Aw) bis zum ersten Ende (61) hin erstreckende Einbuchtungen ausgebildete Ausnehmungen (66) aufweist, die entlang der Umfangsrichtung (U) an dem ersten Ende (61) angeordnet sind und in die im montierten Zustand die Vorsprünge (46) des Werkzeugträgers (40) eingreifen, und
einen an der inneren Umfangsfläche (63) anliegenden Spannteller (68), der eine Verspannfläche (70) für die Spannmutter (48) ausbildet und eine Durchgangsöffnung (69) für die Spannschraube (47) aufweist.

12. Werkzeug (60) nach Anspruch 11, **dadurch gekennzeichnet, dass** der Spannteller (68) mit dem Werkzeug (60) verbunden ist.

13. Werkzeug (60) nach Anspruch 12, **dadurch gekennzeichnet,**
**dass** der Spannteller (68) in das Werkzeug (60) eingepresst ist oder
**dass** der Spannteller (68) mittels eines am Spannteller (68) angebrachten Gewindes, mittels einer Passung oder mittels Madenschrauben mit dem Werkzeug (60) verbunden ist.

14. Werkzeug (60) nach einem der Ansprüche 11 bis 13, **dadurch gekennzeichnet, dass** die Schneidelemente (67) aus monokristallinem oder polykristallinem Diamant hergestellt sind.

15. Werkzeug (60) nach einem der Ansprüche 11 bis 14, **dadurch gekennzeichnet, dass** der Spannteller (68) farblich gestaltbar oder beschriftbar ist.

## Claims

1. A hand milling machine (100) for working the surface of a floor or a wall comprising:
a drive; and
a tool carrier (40) for receiving a tool (60) rotatable about a tool axis (AW), extending along the tool axis (AW) comprising, a first end (41) facing the drive, a second end (42) remote from the drive, a circumferential surface (43) and at least one connecting element (44) for positive reception of the tool (60) at least in circumferential direction (U), and to which the drive transmits a torque for generating a rotation of the tool carrier (40) in the circumferential direction (U);
**characterised by** a clamping device (45) for clamping the tool carrier (40) and the tool (60) against the hand milling machine in the direction of the tool axis (AW), which has a clamping screw (47) and a clamping nut (48) for tightening and loosening the clamping screw (47); and
by a housing (11) for the tool carrier (40) and the tool (60) having a detachable cover (16) facing the second end (42) for changing the tool (60);
the connecting element (44) being arranged at the first end (41) and having at least one projection (46) for engaging in at least one recess (66) of the tool (60).

2. The hand milling machine according to claim 1, **characterised in that** the clamping nut (48) has a hinged handle (49) for tightening and loosening the clamping screw (47).

3. The hand milling machine according to claim 1 or 2, **characterised in that** the housing (11) has at least one guide (17) for attaching the cover (16) to the housing (11).

4. The hand milling machine according to any one of claims 1 to 3, **characterised by** a latch (18) arranged on the housing (11) for holding the cover (16) on the housing (11).

5. The hand milling machine according to any one of claims 1 to 4, **characterised by** an extraction opening (13) for extracting waste and for attaching an extraction hose.

6. The hand milling machine according to one of the claims 1 to 5, **characterised by** an adjusting screw (14) for in particular stepless adjustment of a milling depth.

7. The hand milling machine according to any one of claims 1 to 6, **characterised in that** the tool carrier (40) has a circumferential surface (43) comprising:
at least a first portion (51) configured to guide the tool (60);
at least a second portion (52) having a smaller outer diameter than the first portion (51), and
a circumferentially (U) extending shoulder (50) separating the first portion (51) from the second portion (52).

8. The hand milling machine according to any one of claims 1 to 7, **characterized in that** the connecting element (44) comprises a plurality of projections (46) projecting from the circumferential surface (43) in the radial direction of the tool carrier (40) and arranged along the circumferential direction (U).

9. The hand milling machine according to claim 8, **characterised in that** the projections (46) have equal distances from one another.

10. The hand milling machine according to claim 7, **characterised in that** the first portion (51) has at least one flat surface on its outer periphery.

11. A tool (60) for the hand milling machine according to claim 7 and 8 or according to claim 9 and 10, which is configured as a milling drum, comprising:
a first end (61);
a second end (62);
an inner circumferential surface (63) configured to abut the first portion (51) of the circumferential surface (43) of the tool carrier (40);
an outer circumferential surface (64) fitted with cutting elements (67);
a connecting element (65) for generating a positive connection to the tool carrier (40) at least in the circumferential direction (U), which connecting element (65) has recesses (66) in the form of indentations extending in the direction of the tool axis (AW) as far as the first end (61), which recesses (66) are arranged along the circumferential direction (U) at the first end (61) and in which recesses (66) the projections (46) of the tool carrier (40) engage in the assembled state, and
a clamping plate (68) which bears against the inner circumferential surface (63), forms a clamping surface (70) for the clamping nut (48) and has a through-opening (69) for the clamping screw (47).

12. The tool (60) according to claim 11, **characterised in that** the clamping plate (68) is connected to the tool (60).

13. The tool (60) according to claim 12, **characterised in that**
that the clamping plate (68) is pressed into the tool (60) or
that the clamping plate (68) is connected to the tool (60) by means of a thread attached to the clamping plate (68), by means of a fit or by means of grub screws.

14. The tool (60) according to any one of claims 11 to 13, **characterized in that** the cutting elements (67) are made of monocrystalline or polycrystalline diamond.

15. The tool (60) according to any one of claims 11 to 14, **characterised in that** the clamping plate (68) can be coloured or inscribed.

## Revendications

1. Machine à fraiser à main (100) pour usiner la surface d'un panneau ou d'un mur, comprenant :
un moteur; et
un porte-outil (40) destiné à recevoir un outil (60) pouvant tourner autour d'un axe d'outil (AW), s'étendant le long de l'axe d'outil (AW), comprenant une première extrémité (41) faisant face à l'entraînement, une seconde extrémité (42) s'éloignant de l'entraînement, une surface périphérique (43) et au moins un élément de liaison (44) pour la réception positive de l'outil (60) au moins dans la direction périphérique (U), et auquel l'entraînement transmet un couple pour produire une rotation du porte-outil (40) dans la direction périphérique (U);
**caractérisé par** un dispositif de serrage (45) pour serrer le porte-outil (40) et l'outil (60) contre la machine à fraiser à main dans la direction de l'axe de l'outil (AW), qui comporte une vis de serrage (47) et un écrou de serrage (48) pour serrer et desserrer la vis de serrage (47); et
par un boîtier (11) pour le porte-outil (40) et l'outil (60) ayant un couvercle détachable (16) tourné vers la seconde extrémité (42) pour changer l'outil (60) ;
l'élément de connexion (44) étant disposé à la première extrémité (41) et ayant au moins une saillie (46) pour s'engager dans au moins un évidement (66) de l'outil (60).

2. Machine à fraiser à main selon la revendication 1, **caractérisée en ce que** l'écrou de serrage (48) comporte une poignée articulée (49) pour serrer et desserrer la vis de serrage (47).

3. Machine à fraiser à main selon la revendication 1 ou 2, **caractérisée en ce que** le boîtier (11) comporte au moins un guide (17) pour fixer le couvercle (16) au boîtier (11).

4. Machine à fraiser à main selon l'une quelconque des revendications 1 à 3, **caractérisée par** un loquet (18) disposé sur le boîtier (11) pour maintenir le couvercle (16) sur le boîtier (11).

5. Machine à fraiser à main selon l'une quelconque des revendications 1 à 4, **caractérisée par** une ouverture d'extraction (13) pour l'extraction des déchets et pour la fixation d'un tuyau d'extraction.

6. machine à fraiser à main selon l'une des revendications 1 à 5, **caractérisée par** une vis de réglage (14) pour le réglage notamment en continu d'une profondeur de fraisage.

7. Machine à fraiser à main selon l'une quelconque des revendications 1 à 6, **caractérisée en ce que** le porte-outil (40) présente une surface périphérique (43) comprenant :
au moins une première partie (51) configurée pour guider l'outil (60) ;
au moins une deuxième partie (52) ayant un diamètre extérieur plus petit que la première partie (51), et
un épaulement (50) s'étendant circonférentiellement (U) séparant la première partie (51) de la seconde partie (52).

8. Machine à fraiser à main selon l'une quelconque des revendications 1 à 7, **caractérisée en ce que** l'élément de liaison (44) comprend une pluralité de saillies (46) faisant saillie de la surface périphérique (43) dans la direction radiale du porte-outil (40) et disposées le long de la direction périphérique (U).

9. Machine à fraiser à main selon la revendication 8, **caractérisée en ce que** les saillies (46) présentent des distances égales les unes par rapport aux autres.

10. Machine à fraiser à main selon la revendication 7, **caractérisée en ce que** la première partie (51) présente au moins une surface plane sur sa périphérie extérieure.

11. Outil (60) pour la machine à fraiser à main selon les revendications 7 et 8 ou selon les revendications 9 et 10, qui est configuré comme un tambour de fraisage comprenant :
une première extrémité (61) ;
une seconde extrémité (62) ;
une surface périphérique intérieure (63) configurée pour venir en prise avec la première partie (51) de la surface périphérique (43) du porte-outil (40) ;
une surface périphérique extérieure (64) munie d'éléments de coupe (67) ;
un élément de liaison (65) pour réaliser une liaison par complémentarité de forme avec le porte-outil (40) au moins dans la direction périphérique (U), lequel élément de liaison (65) présente des évidements (66) en forme d'entailles s'étendant dans la direction de l'axe d'outil (AW) jusqu'à la première extrémité (61), lesquels évidements (66) sont disposés le long de la direction périphérique (U) à la première extrémité (61) et dans lesquels les saillies (46) du porte-outil (40) s'engagent à l'état monté, et
une plaque de serrage (68) qui s'appuie contre la surface circonférentielle intérieure (63), forme une surface de serrage (70) pour l'écrou de serrage (48) et présente une ouverture traversante (69) pour la vis de serrage (47).

12. Outil (60) selon la revendication 11, **caractérisé en ce que** la plaque de serrage (68) est reliée à l'outil (60).

13. Outil (60) selon la revendication 12, **caractérisé en ce que**
que la plaque de serrage (68) est pressée dans l'outil (60) ou
que la plaque de serrage (68) est reliée à l'outil (60) au moyen d'un filetage fixé à la plaque de serrage (68), au moyen d'un ajustement ou au moyen de vis sans tête.

14. Outil (60) selon l'une quelconque des revendications 11 à 13, **caractérisé en ce que** les éléments de coupe (67) sont réalisés en diamant monocristallin ou polycristallin.

15. Outil (60) selon l'une quelconque des revendications 11 à 14, **caractérisé en ce que** la plaque de serrage (68) peut être colorée ou inscrite.
